Europäisches Patentamt

European Patent Office

Office européen des brevets

(11) Publication number: **0 321 123**
**A1**

## EUROPEAN PATENT APPLICATION

(21) Application number: **88311379.7**

(22) Date of filing: **01.12.88**

(51) Int. Cl.4: **G01C 17/38**

(30) Priority: **17.12.87 GB 8729415**

(43) Date of publication of application:
**21.06.89 Bulletin 89/25**

(84) Designated Contracting States:
**AT BE CH DE ES FR GR IT LI LU NL SE**

(71) Applicant: **PLESSEY OVERSEAS LIMITED**
**Vicarage Lane**
**Ilford Essex IGI 4AQ(GB)**

(72) Inventor: **Foster, Michael Roy**
**8 The Triangle Whiteparish**
**Salisbury Wiltshire(GB)**

(74) Representative: **Elliott, Frank Edward**
**The Plessey Company plc. Intellectual**
**Property Department Vicarage Lane**
**Ilford, Essex IG1 4AQ(GB)**

(54) **Navigation compass calibration.**

(57) The invention provides a magnetic compass calibration system which compensates for permanent and induced magnetic fields of a vehicle in order to provide an accurate heading indication, wherein x and y magnetometer values are processed in accordance with an algorithm in order to update calibration whereby calibration can be effected without performing a specific manoeuvre such as causing the vehicle to circle through $360°$.

The compass is suitable for use in a navigation system using the dead reckoning technique.

EP 0 321 123 A1

# NAVIGATION COMPASS CALIBRATION

The present invention relates to compasses and more particularly to the automatic calibration of compasses in vehicles.

The efficiency of a compass depends upon its accuracy and consequently compasses must regularly be calibrated.

The types of compasses usually used within vehicles i.e. land, sea or air are of the magnetic or electronic type. These compasses give a bearing indication afforded in dependence upon electronic signals provided by magnetic sensors responsive to the earth's magnetic field.

It will be appreciated that most vehicles include in their structure magnetic materials such as steel. These materials have properties which distort the earth's magnetic field as perceived by the electronic compass. It is thus common practice to calibrate a newly installed electronic compass in its associated vehicle.

The methods of achieving this calibration of installed electronic compasses have comprised typically of Fourier analysis of heading errors, multi-point calibration processes and the use of Kalman filtering techniques. These methods are complex and prone to limitations such as sensitivity to electronic noise and the necessity of requiring the vehicle to perform a specific manoeuvre through 360°. Electronic compasses are disclosed in U.K. Patent Specifications 2128749A and 2130729A. The compasses there described however use a minimum of nine calibration point determinations of the magnetic field in a specific calibration or setting cycle.

The magnetic characteristics of vehicles change with time and can be altered by environmental factors such as passing over a railway level crossing. These changes in magnetic character require regular re-calibration which is tedious using the above specific and complex calibration technique.

It is an object of the present invention to provide a compass and a method performing a compass calibration technique which is less prone to the limitation of minimised data points.

According to a first embodiment of the present invention, there is provided a compass having detecting means arranged in use to be respectively responsive to orthogonal components of the ambient magnetic field in relation to the compass orientation, the compass having data storage means, calibration function determining means and data summing means, the data summing means being adapted for summing specific combinations of respective detected magnetic field values, the data storage means being adapted for storing the summed combinations provided by the summing means, and the calibration function determining means being adapted to manipulate the data stored as summed combinations in the data storage means to provide calibration values for the compass orientation which allow adjustment of the detected magnetic field values substantially to remove distortions in the detected magnetic field values due to magnetic material near the compass, the summing means also being adapted continuously to sum the detected magnetic field values to update data in the data storage means and consequently to update the calibration values.

Preferably, the calibration values may be updated by:

(i) re-determining the values during a specific time period;

(ii) adjusting the current values by either holding or subtracting a proportion of the difference between the current values and newly determined values; or;

(iii) continuously updating.

According to a second embodiment of the present invention, there is provided a compass having detecting means arranged in use to be respectively responsive to orthogonal components of an ambient magnetic field, the compass having data storage means, calibration function determining means and data summing means, the data summing means being adapted for summing specific combinations of respective detected magnetic field values, the data storage means being adapted for storing the summed combinations provided by the summing means, and the calibration function determining means being adapted to manipulate the data in the storage means to provide calibration values for the compass orientation which allow adjustment of the detected magnetic field values substantially to remove distortions in the detected magnetic field values due to magnetic material near the compass, the summing means also being adapted continuously to sum the detected magnetic field values to update data in the data storage means and consequently update the calibration values.

Embodiments of the present invention will now be described, by way of example, with reference to the accompanying drawing and tables wherein;

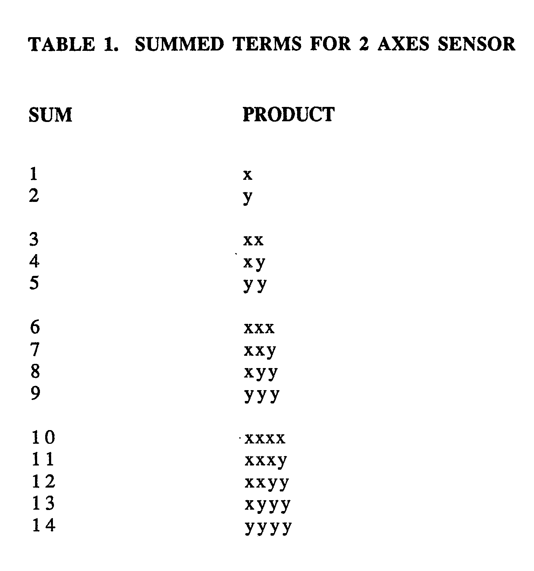

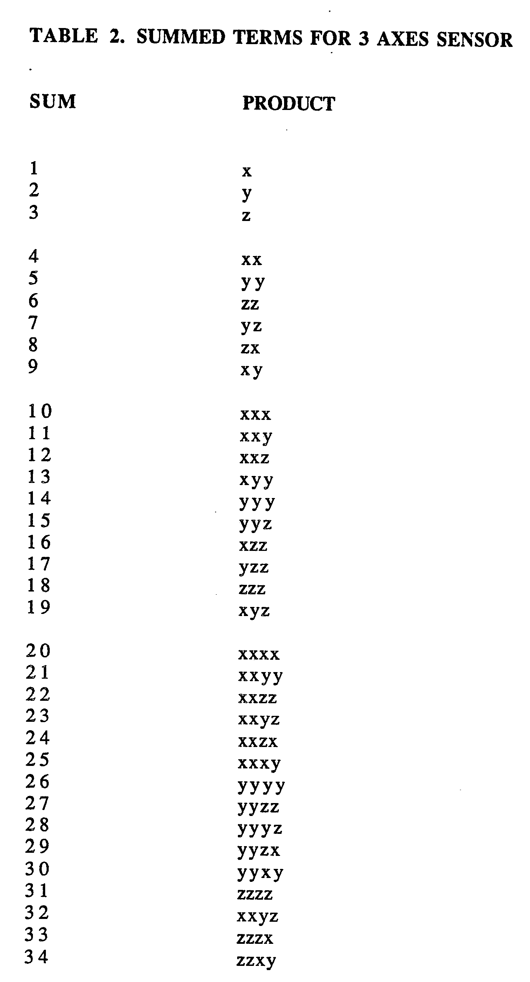

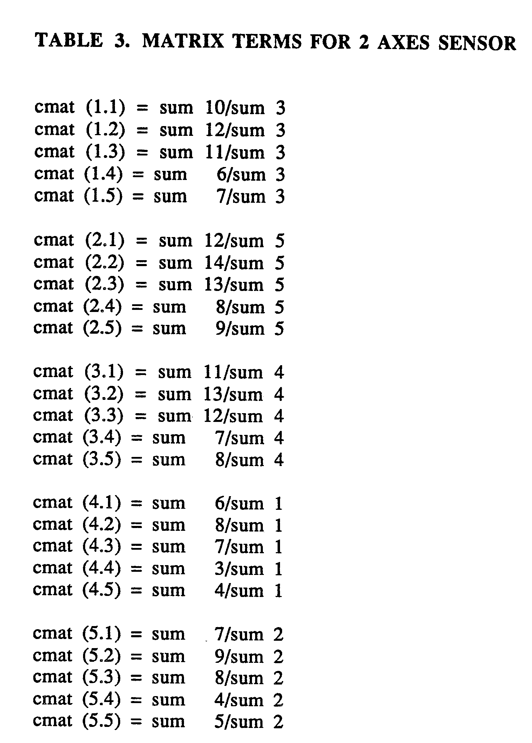

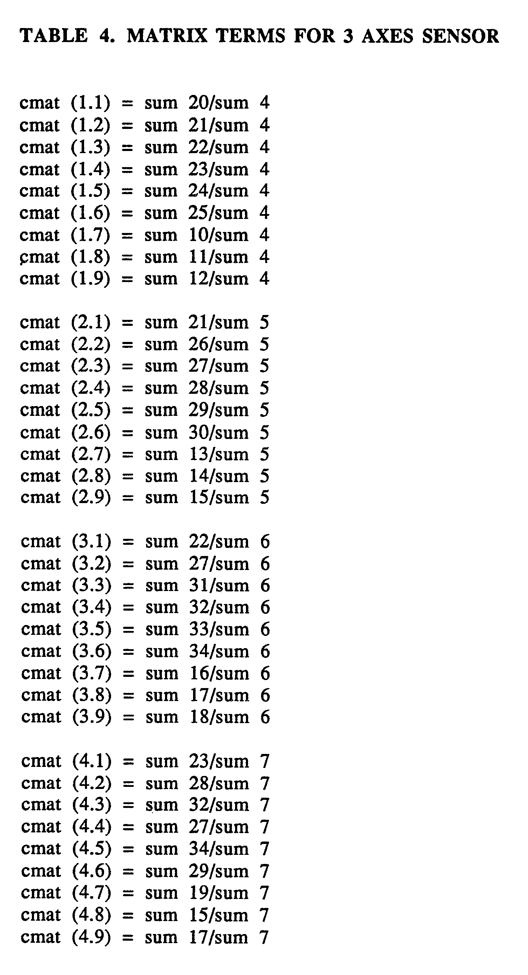

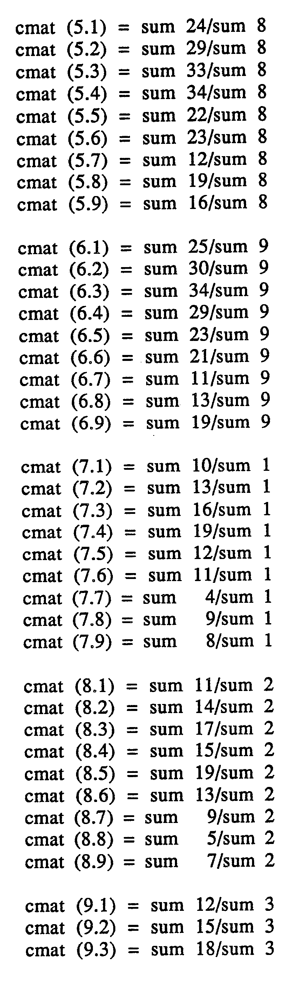

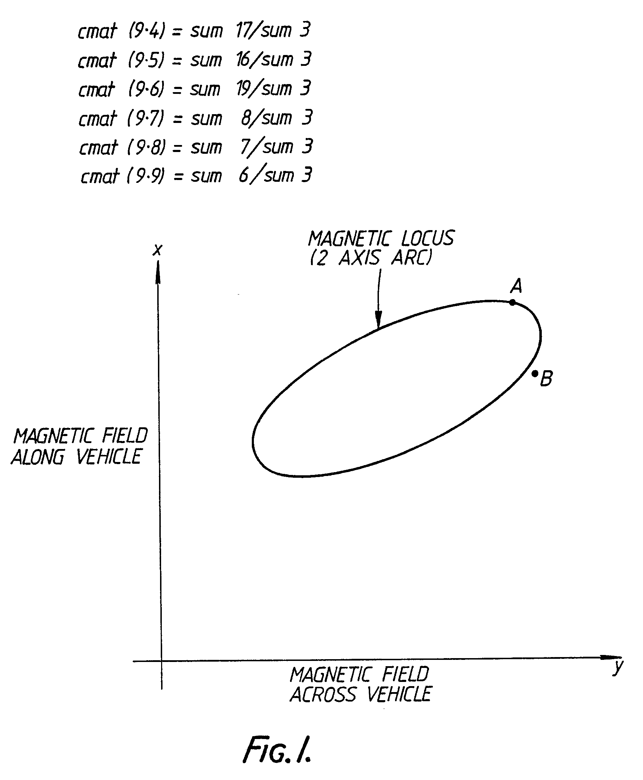

Figure 1 is a graphical representation of a magnetic field in x an y axes or dimensions with respect to a vehicle;

Table 1 is a table of summed values taken from a 2 axes sensor of an electronic compass mounted in a vehicle;

Table 2 is a table of summed values taken from a 3 axes sensor of an electronic compass mounted in a vehicle;

Table 3 is a table of equations of calculation for matrix values of the magnetic field using the summed terms of Table 1 as operators; and

Table 4 is a table of equations of calculation for matrix values of the magnetic field using the summed terms from table 3 as operators.

Magnetic or electronic compasses usually have three orthogonal sensors (two for 2 dimensional arrangements) which give an indication of the magnetic field strength in their respective dimensions or axes. If magnetic structural materials of the vehicle were not present, a plot of the values of these sensors in a three dimension co-ordinate system would give a surface locus that would be spherical in shape. However, the un-ideal condition of a vehicle imposing the effects of spurious magnetic fields tend to distort this ideal spherical shape into an ellipsoid (shown in figure 1, in two dimensions, as an ellipse). The sensors can be said to measure the magnetic field along the x, y and z axes.

The ambient magnetic field in the vicinity of these sensors is a combination of the earth's magnetic field and the spurious magnetic field caused by ferromagnetic or other magnetic parts of the vehicle.

The purpose of calibration is to provide a series of calibration coefficients which adjust the detected values of the magnetic field to approximate the "ideal" spherical surface locus of the magnetic field.

In the present invention, a simple data accumulation process is used to replace complex methods such as Fourier analysis and Kalman filters etc. The process is adaptable to both 2 axes and 3 axes magnetometers or electronic compasses, with appropriate data processing differences.

In operation, a processor element within the system calculates values for each magnetic reading taken (ie 14 parameters for 2 axes and 34 parameters for 3 axes) and adds these newly calculated values to the existing values of accumulated sums.

These accumulated sums are used, within known data processing techniques as described in United Kingdom Specifications 2128749A and 2130729A, to calibrate the magnetic system through a determination of the distorted ellipse (2 axes) or ellipsoid (3 axes) parameters. The data processing techniques involve solving an equation such as:-

$$ax^2 + by^2 + cz^2 + 2fyz + 2gzx + 2hxy + 2ux + 2vy + 2wz = d^2$$

Where x = Magnetic field sensed by the longitudinal vehicle sensor or magnetometer.

y = Magnetic field sensed by the transverse vehicle sensor or magnetometer.

z = Magnetic field sensed by the third orthogonal (vertical) vehicle sensor or magnetometer.

a, b, c, f, g, h, u, v, w, are constants for a defined location upon the vehicle and d is a scaling factor.

It should be noted the above equation is for a 3 axes situation.

A method of solving such an equation is by injecting detected values for x, y and z and then solving the resultant simultaneous equations through a matrix determinant as described in UK Specification 2128749.

The process of calculating correction data and coefficients for magnetic effects due to the vehicle is thus equivalent to the following:-

(i) A translation of the x, y, and z coordinate system to centre the ellipsoid by determination of Px, Py and Pz, ie. the shifted centre co-ordinates of the ellipsoid, such that surface point locations are displaced upon the surface to their true locations without the corresponding displacement effects of the vehicle's permanent magnetic field.

(ii) Relative scaling of the x, y and z co-ordinate axes to change the ellipsoid to a sphere: and,

(iii) Rotation of the sphere back to a corrected orientation.

For a more detailed explanation of the above processes defined both for 2 and 3 axes situations, reference should be made to the above published specifications.

The accumulated sums are shown in tables 1 and 2 for a 2 axes and a 3 axes magnetometer sensor arrangement respectively. To avoid the possibility of the data becoming "stale", the stored accumulated sum is terminated and a new summation started after a predetermined time period.

(iv) A rotation of the x, y, and z coordinate system to the ellipsoid axes whereby the distortive effects of the vehicle are corrected by effective scaling of the ellipsoid;

The calculation of the accumulated sums proceeds as follows:

(i) The value of all sums is initialised to zero.

(ii) The x and y magnetometer detector values (and z values for 3 axes case) are measured.

(iii) The product terms are calculated as per table 1 or 2 for 2 axes and 3 axes situations respectively.

(iv) The product terms are added to the appropriate accumulated sums.

(v) The steps (ii), (iii) and (iv) are repeated until all the calibration data in the tables 1 or 2 respectively is obtained and stored.

(vi) The calibration data is then used to calculate matrix values according to the equations in tables 3 and 4 for insertion into the matrix in the calibration processes defined in U.K. Specifications 2130729A and 2128749A so as to determine the solutions to the equation defining the magnetic field ellipsoid.

(vii) With the values determined from (vi) above, the remaining steps are those disclosed in the referenced prior specifications.

A typical ellipse of magnetic field (2 axes case) is illustrated in Figure 1 for an arbitrary compass location in a vehicle. With the vehicle facing in a particular direction the x and y magnetometer readings are given by point A on the curve. As the vehicle manoeuvres through a range of headings the point A traces out some or all of the ellipse. At each point on the ellipse, the products shown in table 1 are calculated and added to the accumulated sums. In practise tilting of the vehicle and the presence of electrical and magnetic noise will lead to points not lying precisely on the curve (eg point B). However, as the process of the present invention is a dynamic accumulative method, these effects are averaged out over a large number of samples, effectively cancelling them giving this process a distinct advantage over prior systems.

The process for the three axes system follows the above description, but the locus is now represented by an ellipsoid.

The calibration values derived from the terminated summation can be used in a multitude of manners in order to improve the accuracy and consequently the efficiency of an electronic or magnetic compass.

In a first embodiment, new calibration values simply replace old in a dynamic "write/read" fashion.

Alternatively, in a second embodiment of the present invention the old values are, at the end of a specific time period, replaced by values which are derived from the old values by adding a fractional part of the difference between the old and the newly determined value.

In a third embodiment of the present invention, the old value is continuously modified by the latest value derived from the accumulation, while the accumulation is allowed to continue for a predetermined or variable period.

In summary, it can thus be said that calibration of the compass is carried out using data gathered during normal vehicle operation without specific calibration manoeuvres. Compass magnetometer or sensor readings are taken and a series of data sums formed of products of the magnetometer readings. When calibration data is required, the accumulated sums are used to provide best fit values of the calibration coefficients based on the entire accumulated data base. A second advantage of this process is that the calibration coefficients are not noise sensitive in the same way as for instance, in a multi-point calibration process, the effects of electrical and magnetic noise and of tilt errors being cancelled out by the data accumulation techniques.

Magnetometer detector readings of the magnetic field values in the orthogonal axes may be accessed either at a particular instance or, as required, before calculations in the tables 1 or 2 during the accumulation time period.

Although the present invention has been described with respect to particular embodiments, it should be understood that modifications may be effected within the scope of the invention.

The compass of the present invention is suitable for use in a navigation system operating by the dead reckoning technique ie. a determination of an accumulation of distances travelled along specific direction bearings such that the shift of position is appreciated. In such a system, an additional distance sensor such as a wheel rotation determining element is required.

## Claims

1. A compass having detecting means arranged in use to be respectively responsive to orthogonal components of the ambient magnetic field in relation to the compass orientation the compass having data storage means, calibration function determining means and data summing means, the data summing means being adapted for summing specific combinations of respective detected magnetic field values, the data storage means being adapted for storing the summed combinations provided by the summing means, and the calibration function determining means being adapted to manipulate the data in the storage means to provide calibration values for the compass orientation which allow adjustment of the detected magnetic field values substantially to remove distortions in the detected magnetic field values due to magnetic material near the compass, the summing means also being adapted continuously to sum the detected magnetic field values to update the data in the data storage means and consequently to update the calibration values.

2. A compass as claimed in Claim 1 wherein the stored values in the storage means are arranged to be updated over a specific time period, and the calibration values are arranged to be determined during this time period.

3. A compass as claimed in Claim 1 or 2 wherein the calibration function determining means is arranged to update the calibration values by replacing existing values with present calibration value determinations.

4. A compass as claimed in Claim 1 or 2 wherein the calibration function determining means is arranged to update the calibration value by summing a fraction of the difference between an existing calibration value and a newly determined value with the existing calibration value.

5. A compass as claimed in Claim 1 or 2 wherein the calibration function determining means is arranged to update the calibration values continuously from the summing means during a period of time.

6. A navigation system including means for determining location by a dead reckoning technique including a compass having detecting means arranged, in use, to be respectively responsive to orthogonal components of an ambient magnetic field, the compass having data storage means, calibration function determining means and data summing means, the data summing means being adapted for summing specific combinations of respective detected magnetic field values, the data storage means being adapted for storing the summed combinations provided by the summing means, and the calibration function determining means being adapted to manipulate the data in the storage means to provide calibration values for the compass orientation which allow adjustment of the detected magnetic field values substantially to remove distortions in the detected magnetic field values due to magnetic material near the compass, the summing means also being adapted continuously to sum the detected magnetic field values to update data in the data storage means and consequently update the calibration values.

7. A navigation system as claimed in claim 6 wherein the stored values in the storage means arranged to updated over a specific time period, and the calibration values are arranged to be determined during this time period.

8. A method of calibrating a compass having orthogonally mounted magnetic field detectors, comprising the steps of summing the detected magnetic field values from the detectors according to a table of summation over a specific time period, and using these values to calculate operators to be used in a matrix determinant of the calibration function of the compass whereby the solutions of the calibration function allow modification of the detected magnetic field values to give a more accurate direction bearing from the compass.

9. A method as claimed in claim 8 wherein the compass has two orthogonally mounted detectors and the table of summation is as shown in table 1 while the operators for the matrix determinant are as shown in table 3.

10. A method as claimed in claim 8 wherein the compass has 3 orthogonally mounted detectors and the table of summation is as shown in table 2 while the operators for the matrix determinant are as shown in table 4.

11. A method as claimed in any of claims 8, 9 and 10 wherein solutions of the calibration function are updated during the time period by replacing previously determined solutions with newly determined solutions.

12. A method as claimed in any of claims 8, 9 and 10 wherein solutions of the calibration function are updated during the time period by determining the difference between the previous calibration solutions and the newly determined solutions and summing a fraction of this difference with the previous calibration solutions.

13. A method of calibrating a compass as claimed in claim 9 or 10 wherein solutions of the calibration function are continuously updated during the time period by considering summations of the magnetic field from the table of summation.

## TABLE 1. SUMMED TERMS FOR 2 AXES SENSOR

| SUM | PRODUCT |
|-----|---------|
| 1 | x |
| 2 | y |
| 3 | xx |
| 4 | xy |
| 5 | yy |
| 6 | xxx |
| 7 | xxy |
| 8 | xyy |
| 9 | yyy |
| 10 | xxxx |
| 11 | xxxy |
| 12 | xxyy |
| 13 | xyyy |
| 14 | yyyy |

# TABLE 2. SUMMED TERMS FOR 3 AXES SENSOR

| SUM | PRODUCT |
|---|---|
| 1 | x |
| 2 | y |
| 3 | z |
| 4 | xx |
| 5 | y y |
| 6 | zz |
| 7 | y z |
| 8 | zx |
| 9 | x y |
| 10 | xxx |
| 11 | xxy |
| 12 | xxz |
| 13 | xyy |
| 14 | y y y |
| 15 | yyz |
| 16 | xzz |
| 17 | yzz |
| 18 | zzz |
| 19 | xyz |
| 20 | xxxx |
| 21 | xxyy |
| 22 | xxzz |
| 23 | xxyz |
| 24 | xxzx |
| 25 | xxxy |
| 26 | y y y y |
| 27 | yyzz |
| 28 | yyyz |
| 29 | yyzx |
| 30 | yyxy |
| 31 | zzzz |
| 32 | xxyz |
| 33 | zzzx |
| 34 | zzxy |

# TABLE 3. MATRIX TERMS FOR 2 AXES SENSOR

```
cmat (1.1) = sum 10/sum 3
cmat (1.2) = sum 12/sum 3
cmat (1.3) = sum 11/sum 3
cmat (1.4) = sum  6/sum 3
cmat (1.5) = sum  7/sum 3

cmat (2.1) = sum 12/sum 5
cmat (2.2) = sum 14/sum 5
cmat (2.3) = sum 13/sum 5
cmat (2.4) = sum  8/sum 5
cmat (2.5) = sum  9/sum 5

cmat (3.1) = sum 11/sum 4
cmat (3.2) = sum 13/sum 4
cmat (3.3) = sum 12/sum 4
cmat (3.4) = sum  7/sum 4
cmat (3.5) = sum  8/sum 4

cmat (4.1) = sum  6/sum 1
cmat (4.2) = sum  8/sum 1
cmat (4.3) = sum  7/sum 1
cmat (4.4) = sum  3/sum 1
cmat (4.5) = sum  4/sum 1

cmat (5.1) = sum  7/sum 2
cmat (5.2) = sum  9/sum 2
cmat (5.3) = sum  8/sum 2
cmat (5.4) = sum  4/sum 2
cmat (5.5) = sum  5/sum 2
```

## TABLE 4. MATRIX TERMS FOR 3 AXES SENSOR

cmat (1.1) = sum 20/sum 4
cmat (1.2) = sum 21/sum 4
cmat (1.3) = sum 22/sum 4
cmat (1.4) = sum 23/sum 4
cmat (1.5) = sum 24/sum 4
cmat (1.6) = sum 25/sum 4
cmat (1.7) = sum 10/sum 4
cmat (1.8) = sum 11/sum 4
cmat (1.9) = sum 12/sum 4

cmat (2.1) = sum 21/sum 5
cmat (2.2) = sum 26/sum 5
cmat (2.3) = sum 27/sum 5
cmat (2.4) = sum 28/sum 5
cmat (2.5) = sum 29/sum 5
cmat (2.6) = sum 30/sum 5
cmat (2.7) = sum 13/sum 5
cmat (2.8) = sum 14/sum 5
cmat (2.9) = sum 15/sum 5

cmat (3.1) = sum 22/sum 6
cmat (3.2) = sum 27/sum 6
cmat (3.3) = sum 31/sum 6
cmat (3.4) = sum 32/sum 6
cmat (3.5) = sum 33/sum 6
cmat (3.6) = sum 34/sum 6
cmat (3.7) = sum 16/sum 6
cmat (3.8) = sum 17/sum 6
cmat (3.9) = sum 18/sum 6

cmat (4.1) = sum 23/sum 7
cmat (4.2) = sum 28/sum 7
cmat (4.3) = sum 32/sum 7
cmat (4.4) = sum 27/sum 7
cmat (4.5) = sum 34/sum 7
cmat (4.6) = sum 29/sum 7
cmat (4.7) = sum 19/sum 7
cmat (4.8) = sum 15/sum 7
cmat (4.9) = sum 17/sum 7

cmat (5.1) = sum 24/sum 8
cmat (5.2) = sum 29/sum 8
cmat (5.3) = sum 33/sum 8
cmat (5.4) = sum 34/sum 8
cmat (5.5) = sum 22/sum 8
cmat (5.6) = sum 23/sum 8
cmat (5.7) = sum 12/sum 8
cmat (5.8) = sum 19/sum 8
cmat (5.9) = sum 16/sum 8

cmat (6.1) = sum 25/sum 9
cmat (6.2) = sum 30/sum 9
cmat (6.3) = sum 34/sum 9
cmat (6.4) = sum 29/sum 9
cmat (6.5) = sum 23/sum 9
cmat (6.6) = sum 21/sum 9
cmat (6.7) = sum 11/sum 9
cmat (6.8) = sum 13/sum 9
cmat (6.9) = sum 19/sum 9

cmat (7.1) = sum 10/sum 1
cmat (7.2) = sum 13/sum 1
cmat (7.3) = sum 16/sum 1
cmat (7.4) = sum 19/sum 1
cmat (7.5) = sum 12/sum 1
cmat (7.6) = sum 11/sum 1
cmat (7.7) = sum  4/sum 1
cmat (7.8) = sum  9/sum 1
cmat (7.9) = sum  8/sum 1

cmat (8.1) = sum 11/sum 2
cmat (8.2) = sum 14/sum 2
cmat (8.3) = sum 17/sum 2
cmat (8.4) = sum 15/sum 2
cmat (8.5) = sum 19/sum 2
cmat (8.6) = sum 13/sum 2
cmat (8.7) = sum  9/sum 2
cmat (8.8) = sum  5/sum 2
cmat (8.9) = sum  7/sum 2

cmat (9.1) = sum 12/sum 3
cmat (9.2) = sum 15/sum 3
cmat (9.3) = sum 18/sum 3

cmat (9·4) = sum 17/sum 3

cmat (9·5) = sum 16/sum 3

cmat (9·6) = sum 19/sum 3

cmat (9·7) = sum 8/sum 3

cmat (9·8) = sum 7/sum 3

cmat (9·9) = sum 6/sum 3

MAGNETIC LOCUS
(2 AXIS ARC)

$x$

$A$

$\bullet B$

MAGNETIC FIELD
ALONG VEHICLE

MAGNETIC FIELD
ACROSS VEHICLE

$y$

FIG. 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 214 817  (BRITISH AEROSPACE)<br>* Claims 5,6 *<br>--- | 1-3,5-8 | G 01 C  17/38 |
| Y | GB-A-2 141 551  (HONDA)<br>* Abstract; figure 3; claims 1,5; page 6, lines 16-54 *<br>--- | 1-3,5-8 | |
| A | DE-A-3 422 491  (BOSCH)<br>* Claims 1-3; page 6, line 23 - page 7, line 3 *<br>--- | 1,6 | |
| A,D | GB-A-2 130 729  (PLESSEY)<br>* Abstract; figure 8; page 7, lines 32-34 *<br>--- | 1,6 | |
| A,D | GB-A-2 128 749  (PLESSEY)<br>* Abstract; figure 6 *<br>----- | 1,6 | |

TECHNICAL FIELDS
SEARCHED (Int. Cl.4)

G 01 C

The present search report has been drawn up for all claims

| Place of search | Date of completion of the search | Examiner |
|---|---|---|
| THE HAGUE | 08-03-1989 | KOLBE W.H. |